(19) Europäisches Patentamt
European Patent Office
Office européen des brevets

(11) EP 4 749 708 A1

(12) EUROPEAN PATENT APPLICATION

(43) Date of publication:
27.05.2026 Bulletin 2026/22

(21) Application number: 25212513.3

(22) Date of filing: 30.10.2025

(51) International Patent Classification (IPC):
$H01M\ 4/134^{(2010.01)}$  $H01M\ 4/36^{(2006.01)}$
$H01M\ 4/38^{(2006.01)}$  $H01M\ 4/62^{(2006.01)}$

(52) Cooperative Patent Classification (CPC):
H01M 4/386; H01M 4/134; H01M 4/366;
H01M 4/483; H01M 4/625

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 21.11.2024 KR 20240167632

(71) Applicant: Hansol Chemical Co., Ltd
Seoul 06169 (KR)

(72) Inventors:
• PARK, Su Hyun
54524 Iksan-si, Jeonbuk-do (KR)
• KANG, Sung Hwan
54524 Iksan-si, Jeonbuk-do (KR)

• LEE, Jong Ha
54524 Iksan-si, Jeonbuk-do (KR)
• AHN, Jun Uk
54524 Iksan-si, Jeonbuk-do (KR)
• CHOI, Su Min
54524 Iksan-si, Jeonbuk-do (KR)
• MOON, Jee Wan
54524 Iksan-si, Jeonbuk-do (KR)
• KIM, Chang Beom
54524 Iksan-si, Jeonbuk-do (KR)
• KWON, Se Man
54524 Iksan-si, Jeonbuk-do (KR)

(74) Representative: Beck & Rössig
European Patent Attorneys
Denninger Str. 169
81925 München (DE)

(54) ANODE ACTIVE MATERIAL, ANODE, AND LITHIUM SECONDARY BATTERY COMPRISING SAME

(57) Provided is a negative electrode active material including secondary particles assembled from a plurality of primary silicon particles; amorphous carbon filled between the primary silicon particles, surrounding a surface of the primary silicon particles, and surrounding a surface of the secondary particles; and particulate silicon present within the amorphous carbon or independently of the secondary particles and having a cross-sectional area of 0.5 $\mu m^2$ or less, wherein a proportion of the particulate silicon is 6.5 area% or less but excluding 0 area%.

**FIG. 1**

EP 4 749 708 A1

## Description

CROSS-REFERENCE TO RELATED APPLICATION

This application claims priority to and the benefit of Korean Patent Application No. 10-2024-0167632, filed on November 21, 2024, the disclosure of which is incorporated herein by reference in its entirety.

BACKGROUND

### 1. Field of the Invention

The present invention relates to a negative electrode (anode) active material, a negative electrode (anode), and a lithium secondary battery including the same, and more particularly, to a silicon-based negative electrode active material, and a negative electrode and lithium secondary battery including the same.

### 2. Discussion of Related Art

Lithium-ion batteries (LIBs) have been used as the primary power source for mobile electronic devices by having high energy density and easy design. In the future, their application scope is expanding further into electric vehicles and power storage devices for renewable energy.

To apply the lithium-ion batteries to new fields of application, research on LIB materials with characteristics such as higher energy density, longer lifespan, and the like is continuously required.

In particular, research has been conducted on various materials including carbon, silicon, tin, and germanium for negative electrode materials.

Among these, silicon-based negative electrode materials have received much attention due to a much higher energy density than currently commercialized graphite negative electrode materials.

However, the silicon-based negative electrode materials have fatal shortcomings, such as the formation of an unstable solid electrolyte interphase (SEI) layer due to side reactions between the silicon surface and the electrolyte, which deteriorates electrochemical properties, and the pulverization of the electrode material due to internal stress caused by rapid volume expansion during charging and discharging.

In order to solve these problems, methods for nanosizing silicon-based active materials or compositing them into secondary particles of silicon and carbon are being considered, but it is difficult to completely resolve the problems caused by the continuous increase in SEI and collapse of the conductive network.

SUMMARY OF THE INVENTION

The present invention is directed to providing a negative electrode active material for a lithium secondary battery having good lifetime characteristics.

According to an aspect of the present invention, there is provided a negative electrode active material, including secondary particles assembled from a plurality of primary silicon particles; amorphous carbon filled between the primary silicon particles, surrounding a surface of the primary silicon particles and surrounding a surface of the secondary particles; and particulate silicon present within the amorphous carbon or independently of the secondary particles and having a cross-sectional area of 0.5 $\mu m^2$ or less, wherein a proportion of the particulate silicon is 6.5 area% or less, excluding 0 area%.

In a preferred embodiment, a proportion of the particulate silicon may be 3.0 area% or less.

In a preferred embodiment, the primary silicon particle may be a flaky nano silicon fragment.

In a preferred embodiment, the primary silicon particle may be one or more selected from the group consisting of $SiO_x$ (x=0), $SiO_x$ (0<x≤0.5), $SiO_x$ (0.5<x<2), SiC, and an Si alloy.

In a preferred embodiment, when a cumulative volume distribution percentage reaches 50% in a volume distribution for the primary silicon particles measured using a laser diffraction particle size analyzer, a $d_v50$ representing the corresponding particle size may range from 80 to 120 nm.

In a preferred embodiment, when a cumulative volume distribution percentage reaches 50% in a volume distribution for the secondary particles measured using a laser diffraction particle size analyzer, a $D_v50$ representing the corresponding particle size may range from 3 to 15 $\mu m$.

In a preferred embodiment, the amorphous carbon may be formed from one or more selected from the group consisting of sucrose, phenol resin, naphthalene resin, polyvinyl alcohol resin, furfuryl alcohol resin, furan resin, cellulose resin, styrene resin, polyimide resin, epoxy resin, vinyl chloride resin, coal pitch, petroleum pitch, polyvinyl chloride, mesophase pitch, tar, a block copolymer, a polyol, and low molecular weight heavy oil.

In a preferred embodiment, the negative electrode active material may further include crystalline carbon.

In a preferred embodiment, the crystalline carbon may be one or more selected from the group consisting of natural graphite, artificial graphite, expandable graphite, graphene, carbon black, and fullerene.

In a preferred embodiment, the crystalline carbon may be located on a surface of the secondary particle.

In a preferred embodiment, the negative electrode active material may include 5 to 70% of silicon based on the total weight of the negative electrode active material.

According to another aspect, there is provided a negative electrode including the negative electrode active material.

In a preferred embodiment, the negative electrode may have an cumulative heat amount from 80 °C to 200 °C of 180 J/g or less when heated from 25 °C to 200 °C at a rate of 5 °C/min using a differential scanning calorimeter (DSC) after 100 charge/discharge cycles.

According to still another aspect, there is provided a lithium secondary battery including a negative electrode, a positive electrode, and an electrolyte, wherein the negative electrode includes the negative electrode active material.

## BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

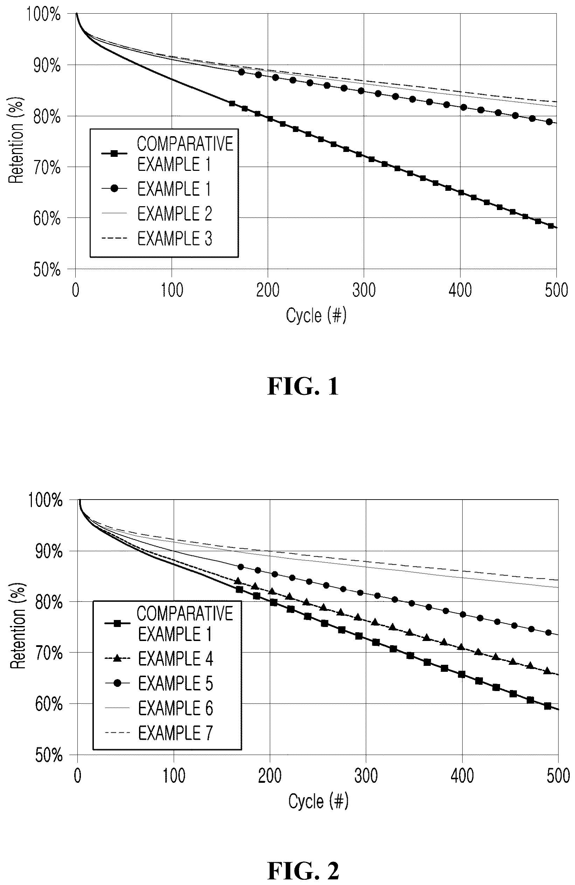

FIGS. 1 and 2 are graphs showing the results of capacity retention measurements after subjecting a lithium secondary battery according to each example to 1 to 500 cycles.

## DETAILED DESCRIPTION OF EXEMPLARY EMBODIMENTS

Hereinafter, one aspect of the present invention will be described based on specific examples. However, the description of this specification may be implemented in several different forms, and thus is not limited to the embodiments described herein.

Throughout the present specification, when a part is said to "include" a component, this means that other components may be further included, not excluded, unless specifically stated otherwise.

When a range of numerical values is recited herein, the values have the precision of the significant figures provided in accordance with the standard rules in chemistry for significant figures, unless a specific range is otherwise stated. For example, 10 includes the range of 5.0 to 14.9, and 10.0 includes the range of 9.50 to 10.49.

Negative electrode active material

As described above, silicon-based active materials have a critical drawback such as the pulverization of the electrode material due to internal stress caused by rapid volume expansion during charging and discharging. To overcome this, research is being focused in the direction of nanosizing silicon-based active materials.

However, the inventors' research results show that during a nanosizing process of silicon-based active materials, particulate silicon that are present independently of silicon complexes is inevitably formed and continuously forms a SEI layer during charging and discharging, which causes a decrease in the lifetime characteristics of the battery. That is, as charging and discharging progress, SEI formation due to side reactions between particulate silicon and the electrolyte intensifies, resulting in particle cracking promoted by volume expansion of the negative electrode active material, and electrolyte penetration into the cracks, thereby causing continuous deterioration of the negative electrode active material. In addition, additional research by the inventors revealed that reducing the proportion of such particulate silicon below a certain level delays the occurrence of side reactions, thereby significantly improving the lifespan characteristics of the negative electrode active material.

That is, one aspect of the present invention relates to a negative electrode active material including secondary particles assembled from a plurality of primary silicon particles; amorphous carbon filled between the primary silicon particles, surrounding a surface of the primary silicon particles and surrounding a surface of the secondary particles; and particulate silicon present within the amorphous carbon or independently of the secondary particles and having a cross-sectional area of 0.5 $\mu m^2$ or less, wherein a proportion of the particulate silicon is 6.5 area% or less but excluding 0 area%. The proportion of the particulate silicon may be preferably 5.0 area% or less, more preferably 4.5 area% or less, even more preferably 4.0 area% or less, even more preferably 3.5 area% or less, and most preferably 3.0 area% or less.

The particulate silicon forms very small silicon clusters separately from the primary silicon particles constituting the secondary particles, and these clusters may be present on the outside of the secondary particles or within the amorphous carbon constituting the matrix of the secondary particles, and when the negative electrode active material further includes crystalline carbon, they may be present within the crystalline carbon. In other words, the particulate silicon may be completely embedded, partially embedded, or not completely embedded in the matrix of the secondary particles.

The particulate silicon cannot be quantified using a laser diffraction particle size analyzer, and its area ratio may be measured using the following method.

(1) The negative electrode active material is mixed with 1.0 to 2.0 wt% of a carboxymethyl cellulose (CMC) aqueous solution in a weight ratio of 3:97 to obtain a mixture.

(2) The mixture is applied onto a copper thin film and dried to form a negative electrode active material layer with a thickness of 50 to 60 $\mu$m.

(3) A cross-section of the negative electrode active material layer is obtained using an ion beam milling machine (IB-19510CP, JEOL).

(4) A cross-sectional image of the negative electrode active material layer is photographed at a magnification of 2,000x using a field emission scanning electron microscope (JSM-7001F, manufactured by JEOL).

(5) From the photographed cross-sectional image, a histogram is extracted using image analysis software (ImageJ, manufactured by the National Institutes of Health), and the median value of the brightness at the two maximum values is derived as a threshold. Then, a ratio ($S_1/S_0 \times 100$) of the total area of silicon particles ($S_0$) and the total area of particulate silicon ($S_1$) with a cross-sectional area of 0.5 $\mu$m$^2$ or less is calculated and used as an area ratio (units: area%) of particulate silicon.

The primary silicon particles may be one or more selected from the group consisting of $SiO_x$ (x=0), $SiO_x$ ($0<x\leq0.5$), $SiO_x$ ($0.5<x<2$), SiC, and an Si alloy, and the Si alloy may be, for example, an Si-Z alloy (wherein Z is one or more elements selected from alkali metals, alkaline earth metals, Group 13 elements, Group 14 elements, transition metals, rare earth elements, and combinations thereof, and is not Si), but is not limited thereto.

The primary silicon particle may be a flaky nano silicon fragment, but is not limited thereto. When the primary silicon particle has a flaky structure, the sphericity may be 0.5 or less, preferably 0.1 to 0.5, and more preferably 0.1 to 0.3. when the sphericity satisfies the above range, an expansion ratio of the electrode plate during negative electrode manufacturing can be reduced, thereby improving the lifespan of the battery. Here, sphericity refers to the ratio of the major axis and the minor axis in the cross-section of a primary silicon particle, and may mean, for example, "major axis ratio" or "length/thickness ratio."

When a cumulative volume distribution percentage reaches 50% in a volume distribution for the primary silicon particles measured using a laser diffraction particle size analyzer (e.g., Mastersizer 3000), a $d_v50$ representing the corresponding particle size may range from 80 to 120 nm. When the $d_v50$ value is excessively large, the volume expansion may be excessive and may be detrimental to the lifetime characteristics, and conversely, when the value is excessively small, the capacity and initial efficiency may decrease.

Dv50 is the maximum particle diameter for which 50% of the sample volume is smaller, also referred to as the volume median diameter.

A crystal grain size of the primary silicon particle may be 10 nm or more, preferably 13 nm or more, and more preferably 15 nm or more. When the crystal grain size of the primary silicon particle is less than 10 nm, it may be disadvantageous for implementing the capacity of the battery. Meanwhile, since a larger crystal grain size of the primary silicon particle is more advantageous for implementing the capacity of the battery, the upper limit thereof is not specifically limited in the present invention, but it may be set to 30 nm considering the lifespan stability of the battery. The crystal grain size can be determined using the following equation after analyzing the crystal structure by scanning the sample powder pellet to be measured with Cu-K$\alpha$ radiation on an X'pert, Malvern Panalytical (XRD) instrument.

$$\tau = \frac{K\lambda}{\beta \cos\theta}$$

($\tau$: crystal grain size, K: shape factor (0.94), $\beta$: X-ray wavelength (FWHM), and $\theta$: peak full width at half maximum (diffraction angle))

When a cumulative volume distribution percentage reaches 50% in a volume distribution for secondary particles in which a plurality of primary silicon particles are assembled measured using a laser diffraction particle size analyzer (e.g., Mastersizer 3000), a $D_v50$ representing the corresponding particle size may range from 3 to 15 $\mu$m. When the $D_v50$ value is excessively large, electrode expansion due to volume expansion of the negative electrode active material may become more severe, which may cause problems with lifespan and stability. Conversely, when the value is excessively small, workability may be disadvantageous in the electrode manufacturing process due to reduced dispersibility.

The amorphous carbon is filled between the primary silicon particles, surrounds the surface of the primary silicon particles, and surrounds the surface of the secondary particles. The amorphous carbon is interposed between a plurality of primary silicon particles and serves to physically connect the plurality of primary silicon particles, and also blocks contact between silicon and the electrolyte during the charge and discharge process, thereby reducing the generation of side products and delaying the deterioration of the negative electrode active material. In addition, it more effectively buffers the volume expansion of silicon nanoparticles, acts as an electron transfer pathway between silicon nanoparticles and the electrolyte to improve conductivity, and reduces electrode resistance. The amorphous carbon may be derived from one or more selected from the group consisting of sucrose, acrylic resin, phenol resin, naphthalene resin, polyvinyl alcohol resin, furfuryl alcohol resin, furan resin, cellulose resin, styrene resin, polyimide resin, epoxy resin, vinyl chloride resin, coal pitch, petroleum pitch, polyvinyl chloride, mesophase pitch, tar, a block copolymer, a polyol, and low molecular weight heavy oil, and preferably, may be derived from one or more selected from the group consisting of coal pitch, petroleum pitch, and acrylic resin, but is not limited thereto.

A softening point of the amorphous carbon is preferably 250 °C or lower, more preferably 220 °C or lower, still more preferably 200 °C or lower, and most preferably 185 °C or lower. When the softening point of the amorphous carbon does not satisfy the above range, excessive formation of particulate silicon may adversely affect lifetime characteristics.

In one aspect of the present invention, the negative electrode active material may further include crystalline carbon. The crystalline carbon may supplement the insufficient electrical conductivity and act as a buffer for volume expansion.

The crystalline carbon may be one or more selected from the group consisting of natural graphite, artificial graphite, expandable graphite, graphene, carbon black, and fullerene, and may preferably be natural graphite, but is not limited thereto. The graphite may be high purity grade having a fixed carbon content of 99 wt% or more and more preferably 99.95 wt% or more, but is not limited thereto.

The natural graphite is graphite that is obtained naturally, and examples include flaky graphite, high crystalline graphite, and amorphous (microcrystalline or cryptocrystalline) graphite.

The artificial graphite is artificially synthesized graphite, manufactured by heating amorphous carbon at high temperatures, and examples may include primary graphite, electrographite, secondary graphite, and graphite fiber.

The expandable graphite may be produced by intercalating chemicals such as acids or alkalis between graphite layers and then heating to expand the vertical layers of the molecular structure.

The graphene includes a single layer or a plurality of single layers of graphite.

The carbon black is a crystalline material with less regularity than graphite, and may be transformed into graphite when heated to about 3,000 °C for a long period of time.

The fullerene is a carbon mixture including at least 3 wt% of fullerene, which is a polyhedral bundle-shaped compound composed of 60 or more carbon atoms.

The crystalline carbon may be located on the surface of the secondary particle or may be present independently of the secondary particle. When the crystalline carbon is located on the surface of the secondary particle, it effectively prevents contact between the silicon nanoparticles and the electrolyte, thereby contributing to the stable electrochemical reversibility of the silicon nanoparticles, and at the same time, contributing to improving the lifetime characteristics of the negative electrode active material based on the stable electrochemical stability with the electrolyte at the outermost layer.

According to one aspect of the present invention, the negative electrode active material may include 5 to 70% of silicon based on the total weight of the negative electrode active material. When the silicon content satisfies the above range, it may be advantageous in terms of the initial efficiency, lifetime characteristics, and output characteristics of the secondary battery.

The negative electrode active material according to one aspect of the present invention may be manufactured by various methods, and the manufacturing method is not particularly limited. However, as a preferred example, the negative electrode active material may be manufactured by a method including the steps of (a) preparing a mixture in which silicon-containing particles are dispersed in an organic solvent; (b) pulverizing the mixture and then spray drying it to prepare a silicon precursor; (c) mixing amorphous carbon with the silicon precursor and then compositing them to prepare a composite particle; and (d) heat-treating the composite particle.

Step (a)

Micrometer-sized silicon particles and an organic solvent are mixed to prepare a mixture in which silicon-containing particles are dispersed in an organic solvent.

The organic solvent may be an alcohol that is easily volatilized without oxidizing the silicon particles, and may be, for example, one or more selected from the group consisting of methanol, ethanol, propanol, butanol, and propylene glycol, and preferably isopropyl alcohol, but is not limited thereto.

A weight ratio of the silicon-containing particles and the organic solvent may be 2:95 to 30:70, preferably 5:95 to 25:75, and more preferably 8:92 to 20:80, but is not limited thereto. When the weight ratio of the silicon-containing particles and the organic solvent satisfies the above range, there is an advantage in that milling efficiency may be maximized.

Step (b)

The mixture obtained in step (a) is pulverized and then spray-dried to prepare a silicon precursor.

The pulverizing step may be performed by one or more physical methods selected from the group consisting of high-energy processes such as milling, stirring, mixing and compression.

The pulverizing step may be performed by one or more methods selected from the group consisting of, for example, bead milling, ball milling, mechanofusion milling, shaker milling, planetary milling, attritor milling, and disk milling.

Balls that may be used in the ball milling may be, for example, zirconia balls, and the like, and there is no limitation on the type of balls, and a size of the ball may be, for example, about 0.3 to 10 mm, but is not limited thereto.

The planetary ball mill may efficiently mix and pulverize a mixture using a noncontact mixing method where the composition rotates and revolves.

In the spray drying step, a solid content of the slurry is preferably 8% or more and less than 15%, more preferably 9% or more and less than 14%, and even more preferably 10% or more and less than 13%. When the solid content of the slurry is too low, excessive particulate silicon formation may result in adverse effects on the lifetime characteristics, while when the solid content is too high, precursor preparation may be difficult.

Step (c)

Amorphous carbon and crystalline carbon are mixed with the silicon precursor obtained in step (c) and then composited to prepare composite particles.

The compositing step may be performed by a melt-mixing method.

A reaction time of the compositing step may be from 1 minute to 12 hours, preferably from 5 minutes to 6 hours, and more preferably from 10 minutes to 3 hours. When the compositing time is too short, the effect of improving the structural stability of the negative electrode active material may be insufficient, and conversely, when it is too long, the capacity and lifespan of the negative electrode active material may be lowered.

A reaction temperature of the compositing step may be 40 to 300 °C, preferably 60 to 280 °C, and more preferably 100 to 250 °C.

A reaction atmosphere of the compositing step may be an air atmosphere or an inert gas atmosphere, and is preferably an inert gas atmosphere, but is not limited thereto.

Step (d)

The composite particles obtained in step (c) are heat-treated to prepare a negative electrode active material.

A heat treatment temperature of the heat treatment step may be 700 to 1100 °C, preferably 800 to 1050 °C, and more preferably 900 to 1000 °C.

A heat treatment time of the heat treatment step may be 1 to 10 hours, and preferably 3 to 7 hours.

The heat treatment step may be performed under an inert gas atmosphere including nitrogen, hydrogen, argon, and a mixed gas thereof, or under vacuum.

Negative electrode

Another aspect of the present invention provides a negative electrode including the negative electrode active material.

The negative electrode may have an cumulative heat amount of 180 J/g or less, preferably 170 J/g or less, more preferably 160 J/g or less, even more preferably 150 J/g or less, even more preferably 140 J/g or less, and most preferably 130 J/g or less, when heated from 25 °C to 200 °C at a rate of 5 °C/min using a differential scanning calorimeter (DSC) after 100 charging/discharging cycles.

The negative electrode may be manufactured by, for example, mixing the negative electrode active material, a binder, and optionally a conductive material in a solvent to prepare a negative electrode active material composition, and then molding the composition into a certain shape or applying it to a current collector such as copper foil.

In addition to the above-described negative electrode active material, the negative electrode may additionally include a negative electrode active material commonly used as a negative electrode active material for a lithium secondary battery in the related art. Commonly used negative electrode active materials may include, for example, one or more selected from the group consisting of lithium metal, metal that may be alloyed with lithium, transition metal oxides, non-transition metal oxides, and carbon-based materials.

The metals that may be alloyed with lithium may be, for example, Si, Sn, Al, Ge, Pb, Bi, Sb, a Si-Y alloy (wherein Y is an alkali metal, an alkaline earth metal, a Group 13 element, a Group 14 element, a transition metal, a rare earth element, or a combination thereof, and is not Si), a Sn-Y alloy (wherein Y is an alkali metal, an alkaline earth metal, a Groups 13 to 16 element, a transition metal, a rare earth element, or a combination thereof, and is not Sn), and the like, but are not limited thereto. The element Y may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof, but is not limited thereto.

The transition metal oxide may be, for example, lithium titanium oxide, vanadium oxide, lithium vanadium oxide, and the like, but is not limited thereto.

The non-transition metal oxide may be, for example, $SnO_2$, $SiO_x(0<x\leq2)$, and the like, but is not limited thereto.

The carbon-based material may be, for example, crystalline carbon, amorphous carbon, or a mixture thereof, but is not limited thereto. The crystalline carbon includes graphite such as amorphous, plate-like, flaky, spherical or fibrous natural graphite or artificial graphite, and the amorphous carbon include soft carbon (low-temperature calcined carbon), hard carbon, mesophase pitch carbide, calcined coke, and the like, but is not limited thereto.

When the negative electrode active material and carbon-based material are used together, the oxidation reaction of the silicon-based active material is suppressed, an SEI film is effectively formed to form a stable film, and electrical conductivity is improved, thereby further improving the charge and discharge characteristics of lithium.

Conventional negative electrode active materials may be mixed and blended with the above-described negative electrode active material, applied on the surface of the above-described negative electrode active material, or used in any other combined form.

The binder used in the negative electrode active material composition is a component that assists in the bonding of the negative electrode active material and the conductive material and the like and the bonding to the current collector, and may be added in an amount of 1 to 50 parts by weight based on 100 parts by weight of the negative electrode active material. For example, the binder may be added in an amount ranging from 1 to 30 parts by weight, from 1 to 20 parts by weight, or from 1 to 15 parts by weight, based on 100 parts by weight of the negative electrode active material.

The binder may include, for example, polyvinylidene fluoride, polyvinylidene chloride, polybenzimidazole, polyimide, polyvinylacetate, polyacrylonitrile, polyvinyl alcohol, carboxymethylcellulose (CMC), starch, hydroxypropylcellulose, regenerated cellulose, polyvinylpyrrolidone, tetrafluoroethylene, polyethylene, polypropylene, polystyrene, polymethyl methacrylate, polyaniline, acrylonitrile butadiene styrene, phenolic resin, epoxy resin, polyethylene terephthalate, polytetrafluoroethylene, polyphenyl sulfide, polyamideimide, polyetherimide, polyethylene sulfone, polyamide, polyacetal, polyphenylene oxide, polybutylene terephthalate, an ethylene-propylene-diene terpolymer (EPDM), a sulfonated EPDM, styrene butadiene rubber, a fluoroelastomer, various copolymers, and the like, but is not limited thereto.

The negative electrode may optionally further include a conductive material to provide a conductive pathway to the negative electrode active material to further improve electrical conductivity.

As the conductive material, any material generally used in a lithium battery may be used, and as an example, conductive materials including carbon-based materials such as carbon black, acetylene black, ketjen black, and carbon fiber (for example, vapor-grown carbon fiber); metal-based materials such as metal powders or metal fibers such as copper, nickel, aluminum, and silver; conductive polymers such as polyphenylene derivatives, or mixtures thereof may be used. The content of the conductive material may be appropriately adjusted and used. For example, a weight ratio of the negative electrode active material and the conductive material may range from 99: 1 to 90: 10.

N-methylpyrrolidone (NMP), acetone, water, etc. may be used as the solvent. An amount of the solvent is 1 to 10 parts by weight based on 100 parts by weight of the negative electrode active material. When the content of the solvent is in the above range, the process for forming the active material layer is easy.

The current collector is generally made to have a thickness of 3 to 500 $\mu$m. The current collector is not particularly limited as long as it has conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy.

In addition, fine irregularities may be formed on a surface of the current collector to strengthen the adhesion of the negative electrode active material, and the current collector may take various forms such as films, sheets, foils, nets, porous bodies, foam, non-woven bodies, and the like.

A negative electrode plate may be obtained by directly applying the prepared negative electrode active material composition onto a current collector or by casting the composition on a separate support and laminating a negative electrode active material film peeled from the support on a copper foil current collector. The negative electrode is not limited to the forms listed above and may have a form other than the above forms.

The negative electrode active material composition may be used not only for manufacturing an electrode of a lithium secondary battery, but may also be used for manufacturing a printable battery by being printed on a flexible electrode substrate.

Lithium secondary battery

Still another aspect of the present invention provides a lithium secondary battery including a negative electrode, a positive electrode, and an electrolyte, wherein the negative electrode includes the negative electrode active material.

The lithium secondary battery may have a capacity retention rate of 60% or more, preferably 65% or more, more preferably 70% or more, even more preferably 75% or more, and most preferably 80% or more after 500 cycles in a voltage range of 2.75 V to 4.2 V.

The positive electrode may be manufactured from a positive electrode active material composition in which a positive electrode active material, a conductive material, a binder, and a solvent are mixed.

As the positive electrode active material, any metal oxide containing lithium may be used as long as it is commonly used in the art.

For example, any compound represented by any one of the following chemical formulas may be used: $Li_aA_{1-b}B_bD_2$ (wherein $0.90 \leq a \leq 1.8$ and $0 \leq b \leq 0.5$); $Li_aE_{1-b}B_SO_{2-c}D_e$ (wherein $0.90 \leq a \leq 1.8$, $0 \leq b \leq 0.5$, and $0 \leq c \leq 0.05$); $LiE_{2-b}B_bO_{4-c}D_c$ (wherein $0 \leq b \leq 0.5$ and $0 \leq c \leq 0.05$); $Li_aNi_{1-b-c}Co_bB_cD_\alpha$ (wherein $0.90 \leq a \leq 1.8$, $0 \leq b \leq 0.5$, $0 \leq c \leq 0.05$, and $0 < \alpha \leq 2$); $Li_aNi_{1-b-c}Co_bB_cO_{2-\alpha}F_\alpha$ (wherein $0.90 \leq a \leq 1.8$, $0 \leq b \leq 0.5$, $0 \leq c \leq 0.05$, and $0 < \alpha < 2$); $Li_aNi_{1-b-c}Co_bB_cO_{2-\alpha}F_\alpha$ (wherein $0.90 \leq a \leq 1.8$, $0 \leq b \leq 0.5$, $0 \leq c \leq 0.05$, and $0 < \alpha < 2$); $Li_aNi_{1-b-c}Mn_bB_cD_\alpha$ (wherein $0.90 \leq a \leq 1.8$, $0 \leq b \leq 0.5$, $0 \leq c \leq 0.05$, and $0 < \alpha \leq 2$); $Li_aNi_{1-b-c}Mn_bB_cO_{2-\alpha}F_\alpha$ (wherein $0.90 \leq a \leq 1.8$, $0 \leq b \leq 0.5$, $0 \leq c \leq 0.05$, and $0 < \alpha < 2$); $Li_aNi_{1-b-c}Mn_bB_cO_{2-\alpha}F_\alpha$ (wherein $0.90 \leq a \leq 1.8$, $0 \leq b \leq 0.5$, $0 \leq c \leq 0.05$, and $0 < \alpha < 2$); $Li_aNi_bE_cGaO_2$ (wherein $0.90 \leq a \leq 1.8$, $0 \leq b \leq 0.9$, $0 \leq c \leq 0.5$, and $0.001 \leq d \leq 0.1$); $Li_aNi_b Co_cMn_dG_eO_2$ (wherein $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (wherein $0.90 \leq a \leq 1.8$ and $0.001 \leq b \leq 0.1$); $Li_aCoG_bO_2$ (wherein $0.90 \leq a \leq 1.8$ and $0.001 \leq b \leq 0.1$); $Li_aMnG_bO_2$ (wherein $0.90 \leq a \leq 1.8$ and $0.001 \leq b \leq 0.1$); $Li_aMn_2G_dO_4$ (wherein $0.90 \leq a \leq 1.8$ and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)2}(PO_4)_3$ ($0 \leq f \leq 2$); $Li_{(3-f)}Fe_2(PO_4)_3$ ($0 \leq f \leq 2$); and $LiFePO_4$.

In the above chemical formulas, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

Of course, it is also possible to use a compound having a coating layer on the surface of the compound, or it is also possible to use a mixture of the compound and a compound having a coating layer. The coating layer may include a coating element compound such as an oxide, hydroxide, oxyhydroxide, oxycarbonate, or hydroxycarbonate of the coating element. The compounds forming these coating layers may be amorphous or crystalline. The coating elements included in the coating layer may include Mg, Al, Co, K, Na, Ca, Si, Ti, V, Sn, Ge, Ga, B, As, Zr, or a mixture thereof. The coating layer forming process may employ any coating method, provided that these elements are incorporated into the compound using a method that does not adversely affect the physical properties of the positive electrode active material (e.g., spray coating, immersion coating, and the like). Since this is well understood by those skilled in the art, a detailed description will be omitted.

For example, $LiNiO_2$, $LiCoO_2$, $LiMn_xO_{2x}$ (x=1 or 2), $LiNi_{1-x}Mn_xO_2$ ($0 < x < 1$), $LiNi_{1-x-y}Co_xMn_yO_2$ ($0 \leq x \leq 0.5$, $0 \leq y \leq 0.5$), $LiFeO_2$, $V_2O_5$, TiS, MoS, and the like may be used.

In the positive electrode active material composition, the same conductive material, binder, and solvent as in the negative electrode active material composition described above may be used. In some cases, it is also possible to form pores in the electrode plate by further adding a plasticizer to the positive active material composition and the negative electrode active material composition. The content of the positive electrode active material, the conductive material, the binder, and the solvent is at a level commonly used in a lithium battery.

The prepared positive electrode active material composition may be directly applied and dried onto a positive electrode current collector to manufacture a positive electrode plate. Alternatively, the positive electrode active material composition may be cast on a separate support, and then the film obtained by peeling from the support may be laminated on a positive electrode current collector to manufacture a positive electrode plate.

The positive electrode current collector has a thickness of 3 to 500 $\mu$m, and is not particularly limited as long as it has high conductivity without causing a chemical change in the battery, and for example, stainless steel, aluminum, nickel, titanium, calcined carbon, or aluminum or stainless steel whose surface is treated with carbon, nickel, titanium, silver, etc. may be used. Fine irregularities may be formed on the surface of the positive electrode current collector to increase the adhesion of the positive electrode active material, and various forms such as a film, a sheet, a foil, a net, a porous body, a foam, and a nonwoven body are possible.

The positive electrode and the negative electrode may be separated by a separator, and any separator commonly used in a lithium battery may be used. In particular, those having low resistance to ion migration of the electrolyte and excellent electrolyte impregnation ability are suitable. For example, the material may be selected from among glass fiber, polyester, Teflon, polyethylene, polypropylene, polytetrafluoroethylene (PTFE), or a combination thereof and may be in a nonwoven or woven form. The separator may have a pore diameter of 0.01 to 10 $\mu$m and a thickness generally ranging from 5 to 300 $\mu$m.

A non-aqueous electrolyte containing a lithium salt is composed of a non-aqueous electrolyte and lithium. As the non-aqueous electrolyte, a non-aqueous electrolyte solution, a solid electrolyte, an inorganic solid electrolyte, and the like are used.

As the non-aqueous electrolyte, for example, an aprotic organic solvent such as N-methyl-2-pyrrolidinone, propylene carbonate, ethyl carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolane, formamide, dimethylformamide, acetonitrile, nitromethane, methyl formate, methyl acetate, phosphoric acid triester, trimethoxymethane, a dioxolane derivative, sulfolane, methyl sulfolane, 1,3-dimethyl-2-imidazolidinone, a propylene carbonate derivative, a tetrahydrofuran derivative, ether, methyl propionate, or ethyl propionate may be used.

As the organic solid electrolyte, for example a polymeric material including polyethylene derivatives, polyethylene oxide derivatives, polypropylene oxide derivatives, phosphoric acid ester polymers, poly agitation lysine, polyester sulfide, polyvinyl alcohol, polyvinylidene fluoride, an ionic dissociating group and the like may be used.

As the inorganic solid electrolyte, nitrides, halides, sulfates, and the like of Li, such as $Li_3N$, $LiI$, $Li_5Ni_2$, $Li_3N$-$LiI$-$LiOH$, $LiSiO_4$, $LiSiO_4$-$LiI$-$LiOH$, $Li_2SiS_3$, $Li_4SiO_4$, $Li_4SiO_4$-$LiI$-$LiOH$, $Li_3PO_4$-$Li_2S$-$SiS_2$, and the like may be used.

The lithium salt may be any one commonly used in lithium batteries, and is a material that is easily soluble in the non-aqueous electrolyte, and for example, one or more of $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$, lithium chloroborate, lithium lower aliphatic carboxylates, lithium 4-phenylborate, imide, and the like may be used.

Lithium secondary batteries may be classified into lithium-ion batteries, lithium-ion polymer batteries, and lithium polymer batteries according to the type of separator and electrolyte used, may be classified into cylindrical, prismatic, coin-type, pouch-type, and the like according to its shape, and may be divided into a bulk type and a thin-film type according to its size.

Since methods for manufacturing these batteries are well known in the art, detailed descriptions are omitted.

Hereinafter, examples of the present specification will be described in more detail. However, the following experimental results describe only representative experimental results among the examples, and the scope and content of the present invention may not be interpreted as being reduced or limited by the examples. Each effect of various implementations of the present specification not explicitly presented below will be specifically described in the corresponding section.

Comparative Example 1

Metal grade silicon (MGS) and isopropyl alcohol were input into a bead mill in a weight ratio of 1:10 and pulverized to a $d_v50$ of 109 nm, and then a silicon precursor with a $D_v50$ of 7.5 um was prepared using a spray dryer. At this time, a solid content of the slurry used for spray drying was set to 9%. The silicon precursor, petroleum pitch, and graphite were input in a ratio of 5:4:1 based on the weight of the carbonized material into a self-made coating machine, and a coating process was performed for 20 minutes. At this time, petroleum pitch with a softening point of 275 °C was used. The coated particles were heat-treated at 930 °C to obtain a negative electrode active material, which was classified using a 400-mesh sieve.

Example 1

A negative electrode active material was prepared in the same method as in Comparative Example 1, except that a coating process was performed using petroleum pitch with a softening point of 210 °C when preparing the negative electrode active material.

Example 2

A negative electrode active material was prepared in the same method as in Comparative Example 1, except that a coating process was performed using petroleum pitch with a softening point of 180 °C when preparing the negative electrode active material.

Example 3

A negative electrode active material was prepared in the same method as in Comparative Example 1, except that a coating process was performed using petroleum pitch with a softening point of 150 °C when preparing the negative electrode active material.

Example 4

A negative electrode active material was prepared in the same method as in Comparative Example 1, except that a solid content of the slurry used for spray drying when preparing the negative electrode active material was set to 11%.

Example 5

A negative electrode active material was prepared in the same method as in Comparative Example 1, except that a solid content of the slurry used for spray drying when preparing the negative electrode active material was set to 13%.

Comparative Example 2

A negative electrode active material was prepared in the same method as in Comparative Example 1, except that a solid content of the slurry used for spray drying when preparing the negative electrode active material was set to 15%.

Example 6

A negative electrode active material was prepared in the same method as in Example 2, except that a solid content of the slurry used for spray drying when preparing the negative electrode active material was set to 13%.

Example 7

A negative electrode active material was prepared in the same method as in Example 3, except that a solid content of the slurry used for spray drying when preparing the negative electrode active material was set to 13%.

Experimental Example 1: Measurement of area ratio of particulate silicon

Each of the negative electrode active materials obtained in Examples 1 to 7 and Comparative Examples 1 and 2 was mixed with 1.0 to 2.0 wt% of a carboxymethyl cellulose (CMC) aqueous solution in a weight ratio of 3:97 to obtain a mixture.

The mixture was applied onto a copper thin film and dried to form a negative electrode active material layer with a thickness of 50 to 60 $\mu$m.

A cross-section of the negative electrode active material layer was obtained using an ion beam milling machine (IB-19510CP, JEOL).

A cross-sectional image of the negative electrode active material layer was photographed at a magnification of 2,000x using a field emission scanning electron microscope (JSM-7001F, manufactured by JEOL).

From the photographed cross-sectional image, a histogram was extracted using an image analysis software (ImageJ, manufactured by the National Institutes of Health), and the median value of the brightness at the two maximum values was derived as a threshold. Then, a ratio ($S_1/S_0$ X100) of the total area of silicon particles ($S_0$) and the total area of particulate silicon ($S_1$) with a cross-sectional area of 0.5 $\mu$m$^2$ or less was calculated and used as an area ratio (units: area%) of particulate silicon. The results are shown in Table 1 below.

[Table 1]

| | Comparative Example 1 | Example 1 | Example 2 | Example 3 | Example 4 |
|---|---|---|---|---|---|
| Particulate silicon proportion (area%) | 6.89 | 4.56 | 2.80 | 1.91 | 6.43 |

(Table 1 continued)

| | Example 5 | Comparative Example 2 | Example 6 | Example 7 |
|---|---|---|---|---|
| Particulate silicon proportion (area%) | 5.36 | Precursor preparation not possible | 1.72 | 1.53 |

Experimental Example 2: Measurement of cumulative heat amount

Each of the negative electrode active materials obtained in Examples 1 to 7 and Comparative Examples 1 and 2 was uniformly mixed with a conductive material (Super P) and a binder (SBR-CMC) in a weight ratio of 93:3:4 (active material:conductive material:binder) to prepare a negative electrode slurry. The prepared negative electrode slurry was applied onto a 20 $\mu$m thick copper foil current collector, dried at 120 °C for 30 minutes, and then roll-pressed to manufacture a negative electrode.

A CR2032-type coin half cell was manufactured using lithium metal as a counter electrode, a PE separator as a separator, and 1.0 M of LiPF$_6$ dissolved in a mixed solvent including ethylene carbonate (EC), diethyl carbonate (DEC), and dimethyl carbonate (DMC) in a volume ratio of 3:5:2 as an electrolyte.

The coin half cell was charged at a constant current rate of 1.0 C until the voltage reached 4.2 V (vs. Li), and then charged at a constant voltage while maintaining 4.2 V until the current reached 0.05 C. After the coin cell was allowed to rest for 10 minutes after charging, it was discharged at a constant current of 1.0 C until the voltage reached 2.7 V (vs. Li), and this cycle was repeated 100 times.

After drying and washing the coin half cell in a dry room environment, it was disassembled to extract the negative electrode active material, and then a dynamic scanning calorimeter (DSC) analysis was performed on the extracted negative electrode active material powder. The heating value in Table 2 below refers to the cumulative heat amount from 80 °C to 200 °C when the temperature is increased from 20 °C to 200 °C at a rate of 5 °C/min.

[Table 2]

|  | Comparative Example 1 | Example 1 | Example 2 | Example 3 |
| --- | --- | --- | --- | --- |
| DSC (J/g) | 183.3 | 142.8 | 125.1 | 122.4 |

(Table 2 continued)

|  | Example 4 | Example 5 | Example 6 | Example 7 |
| --- | --- | --- | --- | --- |
| DSC (J/g) | 179.8 | 165.3 | 121.1 | 120.5 |

When the negative electrode active material and electrolyte come into direct contact, an SEI layer is inevitably formed. Generally, once the SEI layer is densely formed, it acts as a coating layer to prevent further SEI layer formation. However, in the case of negative electrode active materials, such as silicon, that have a large volume change, as the volume changes during charging and discharging, a process of causing cracks in the SEI layer and allowing electrolyte to penetrate through the gaps to form a new SEI layer is repeated, thereby accelerating the deterioration of the electrode. Referring to Table 2, it can be confirmed that Comparative Example 1 shows the highest cumulative heat value among the experimental groups. This means that SEI is continuously formed in large quantities. Examples 1 to 7 showed a decrease in cumulative heat value compared to Comparative Example 1, and in particular, it can be confirmed that Examples 2, 3, 6, and 7 showed a significant decrease in cumulative heat value to 2/3 compared to Comparative Example 1.

Experimental Example 3: Battery performance evaluation

(1) Manufacture of negative electrode pieces

15.0 wt% of the negative electrode active material prepared above, 80.0 wt% of natural graphite, 2.0 wt% of carbon fiber as a conductive material, 1.5 wt% of carboxymethyl cellulose, and 1.5 wt% of styrene-butadiene rubber as a binder were mixed in solution to prepare a negative electrode active material slurry. The prepared slurry was applied onto a Cu thin film current collector and dried, and then roll-pressed to a mixture density of 1.55 g/cc, thereby manufacturing a negative electrode.

(2) Manufacture of positive electrode pieces

96.0 wt% of NCM as a positive electrode active material, 2.0 wt% of acetylene black as a conductive material, and 2.0 wt% of polyvinylidene fluoride (PVdF) as a binder were mixed in an N-methyl pyrrolidone (NMP) solvent to prepare a positive electrode active material slurry. The slurry was applied onto an Al thin film current collector, dried, and then roll-pressed to a mixture density of 3.2 g/cc, thereby manufacturing a positive electrode.

(3) Manufacture of cell

The characteristics of the prepared negative electrode active material were evaluated using a 30mm x 40mm 6-stack pouch cell. The negative electrode was cut to 13.00 $cm^2$ and the positive electrode to 12.30 $cm^2$, and six sheets of each were stacked with the coated sides facing each other, and each electrode was separated by a separator to manufacture a cell. At this time, the N/P ratio, which is a capacity ratio per unit area of the negative electrode and positive electrode, was set as 1.1. An electrolyte including 5% FEC added to a mixed solvent of ethylene carbonate and diethyl carbonate (EC: DEC = 3:7) in which 1.0 M $LiPF_6$ was dissolved was input into the completed dry cell in an amount of 5.0 g/Ah to construct a cell.

(4) Measurement of capacity retention rate

The manufactured cell was charged at a constant current rate of 0.1 C twice at 25 °C until the voltage reached 4.2 V, and then charged at a constant voltage while maintaining 4.2 V until the current reached 0.05 C. After the cell was allowed to rest for 10 minutes after charging, it was discharged at a constant current of 0.1 C until the voltage reached 2.75 V (performed twice, initial formation).

Thereafter, the cell was charged at a constant current rate of 1.0 C at 25 °C until the voltage reached 4.2 V, and then charged at a constant voltage while maintaining 4.2 V until the current reached 0.05 C. After the coin cell was allowed to rest for 10 minutes after charging, it was discharged at a constant current of 1.0 C until the voltage reached 2.75 V, and this cycle was repeated (1st to 500th cycle).

The capacity retention rate characteristics were calculated from the following equation (n is an integer from 1 to 500).

$$\text{Capacity retention rate} = \frac{1\ C\ \text{discharge capacity}_{nth}}{1\ C\ \text{discharge capacity}_{1st}} \times 100\%$$

FIGS. 1 and 2 are graphs showing the results of capacity retention measurements after subjecting a lithium secondary battery according to each example to 1 to 500 cycles, and Table 3 below shows the results of capacity retention measurements after 500 cycles.

[Table 3]

|  | Comparative Example 1 | Example 1 | Example 2 | Example 3 |
|---|---|---|---|---|
| Capacity retention rate (@500th cycle) | 58.1% | 78.6% | 81.9% | 82.6% |

(Table 3 continued)

|  | Example 4 | Example 5 | Example 6 | Example 7 |
|---|---|---|---|---|
| Capacity retention rate (@500th cycle) | 65.1% | 73.6% | 82.9% | 83.8% |

From Table 3, it can be confirmed that Examples 1 to 7 have a lower content of particulate silicon than Comparative Example 1, and thus the capacity retention rate is maintained relatively high after 500 cycles. In particular, it can be confirmed that Examples 2, 3, 6, and 7, in which the content of particulate silicon is suppressed to 3.0 wt% or less, have significantly improved lifetime characteristics with a capacity retention rate of 80% or more after 500 cycles.

A negative electrode active material of the present invention can significantly improve the lifetime characteristics of a lithium secondary battery by controlling the proportion of silicon microparticles to a certain level or lower.

The effects of the present invention are not limited to the above-described effect and should be understood to include all effects that can be inferred from the configuration described in the detailed description or claims of the present specification.

The description of the present specification described above is for illustrative purposes, and those of ordinary skill in the art will readily appreciate that aspects of the present specification can easily be modified into other specific forms without changing the technical idea or essential features described in this specification. Therefore, it should be understood that the embodiments described above are illustrative in all respects and not restrictive. For example, each component described as a single type may be implemented in a distributed form, and likewise components described as distributed may be implemented in a combined form.

**Claims**

1. A negative electrode active material comprising:

   secondary particles assembled from a plurality of primary silicon particles;
   amorphous carbon filled between the primary silicon particles, surrounding a surface of the primary silicon particles, and surrounding a surface of the secondary particles; and
   particulate silicon present within the amorphous carbon or independently of the secondary particles and having a cross-sectional area of 0.5 $\mu m^2$ or less,

wherein a proportion of the particulate silicon is 6.5 area% or less but excluding 0 area%.

2. The negative electrode active material of claim 1, wherein a proportion of the particulate silicon is 3.0 area% or less but excluding 0 area%.

3. The negative electrode active material of claim 1 or 2, wherein the primary silicon particle is a flaky nano silicon fragment.

4. The negative electrode active material of one of claims 1 to 3, wherein the primary silicon particle is one or more selected from the group consisting of
$SiO_x$ wherein x=0, $SiO_x$ wherein $0<x\leq0.5$, $SiO_x$ wherein $0.5<x<2$, SiC, and an Si alloy.

5. The negative electrode active material of one of claims 1 to 4, wherein when a cumulative volume distribution percentage reaches 50% in a volume distribution for the primary silicon particles measured using a laser diffraction particle size analyzer, a $D_v50$ representing the corresponding particle size ranges from 80 to 120 nm.

6. The negative electrode active material of one of claims 1 to 5, wherein when a cumulative volume distribution percentage reaches 50% in a volume distribution for the secondary particles measured using a laser diffraction particle size analyzer, a $D_v50$ representing the corresponding particle size ranges from 3 to 15 $\mu$m.

7. The negative electrode active material of one of claims 1 to 6, wherein the
amorphous carbon is formed from one or more selected from the group consisting of sucrose, phenol resin, naphthalene resin, polyvinyl alcohol resin, furfuryl alcohol resin, furan resin, cellulose resin, styrene resin, polyimide resin, epoxy resin, vinyl chloride resin, coal pitch, petroleum pitch, polyvinyl chloride, mesophase pitch, tar, a block copolymer, a polyol, and low molecular weight heavy oil.

8. The negative electrode active material of one of claims 1 to 7, further comprising crystalline carbon.

9. The negative electrode active material of claim 8, wherein the crystalline carbon is one or more selected from the group consisting of natural graphite, artificial graphite, expandable graphite, graphene, carbon black, and fullerene.

10. The negative electrode active material of one of claims 1 to 9, wherein 5 to 70% of silicon is included based on a total weight of the negative electrode active material.

11. A negative electrode comprising the negative electrode active material of any one of claims 1 to 10.

12. The negative electrode of claim 11, wherein a cumulative heat amount from 80 °C to 200 °C is 180 J/g or less when heated from 20 °C to 200 °C at a rate of 5 °C/min using a differential scanning calorimeter (DSC) after 100 charge/discharge cycles.

13. A lithium secondary battery comprising a negative electrode, a positive electrode, and an electrolyte,
wherein the negative electrode includes the negative electrode active material of any one of claims 1 to 10.

**FIG. 1**

**FIG. 2**

**EUROPEAN SEARCH REPORT**

Application Number

EP 25 21 2513

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 266 411 A1 (POSCO HOLDINGS INC [KR]; RES INST IND SCIENCE & TECH [KR]) 25 October 2023 (2023-10-25) | 1,2,4-13 | INV. H01M4/134 H01M4/36 |
| Y | * paragraphs [1018], [0019], [0011], [0020], [0021], [0027], [0058], [0081], [0113], [0114]; claims 26,27; figure 1 * | 3 | H01M4/38 H01M4/62 |
|   | ----- |   |   |
| Y | EP 4 329 001 A1 (SAMSUNG SDI CO LTD [KR]) 28 February 2024 (2024-02-28) * paragraphs [0027], [0028], [0052]; figure 1a * | 3 |   |
|   | ----- |   |   |
| A | KR 2022 0072983 A (HAN DONG HEE [KR]) 3 June 2022 (2022-06-03) * paragraphs [0001], [0013], [0024] * | 1-13 |   |
|   | ----- |   |   |

**TECHNICAL FIELDS SEARCHED (IPC)**

H01M

The present search report has been drawn up for all claims

| Place of search | Date of completion of the search | Examiner |
|---|---|---|
| The Hague | 17 March 2026 | Fagundes-Peters, D |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 2513

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2026

| Patent document cited in search report | | Publication date | Patent family member(s) | | Publication date |
|---|---|---|---|---|---|
| EP 4266411 | A1 | 25-10-2023 | CN | 116897443 A | 17-10-2023 |
| | | | EP | 4266411 A1 | 25-10-2023 |
| | | | JP | 2023554662 A | 28-12-2023 |
| | | | KR | 20220089687 A | 28-06-2022 |
| | | | US | 2024055586 A1 | 15-02-2024 |
| | | | WO | 2022139429 A1 | 30-06-2022 |
| EP 4329001 | A1 | 28-02-2024 | CN | 119768931 A | 04-04-2025 |
| | | | EP | 4329001 A1 | 28-02-2024 |
| | | | KR | 20240027437 A | 04-03-2024 |
| | | | US | 2024072247 A1 | 29-02-2024 |
| | | | WO | 2024043673 A1 | 29-02-2024 |
| KR 20220072983 A | | 03-06-2022 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240167632